# EUROPÄISCHE PATENTSCHRIFT

(11) **EP 0 799 485 B1**
(45) Veröffentlichungstag und Bekanntmachung des Hinweises auf die Patenterteilung: **28.04.1999**
(21) Anmeldenummer: 95943159.4
(22) Anmeldetag: 20.12.1995
(51) Int. Cl.: G21C 9/016

(54) **KÜHLSYSTEM ZUR KÜHLUNG EINES ZUR AUFNAHME VON KERNSCHMELZE AUSGELEGTEN RÜCKHALTERAUMS**
SYSTEM FOR COOLING A CONTAINMENT CHAMBER IN THE EVENT OF CORE MELT-THROUGH
SYSTEME DE REFROIDISSEMENT POUR ENCEINTE DE CONFINEMENT PREVUE EN CAS DE FUSION DU COEUR D'UN REACTEUR NUCLEAIRE

(30) Priorität: 23.12.1994 DE 4446421
(43) Veröffentlichungstag der Anmeldung: 08.10.1997
(73) Patentinhaber: SIEMENS AKTIENGESELLSCHAFT, 80333 München (DE)
(72) Erfinder: HOLLMANN, Josef, D-96132 Schlüsselfeld (DE)
(86) Internationale Anmeldenummer: DE9501823
(87) Internationale Veröffentlichungsnummer: WO9620485

(56) Entgegenhaltungen:
- EP-A- 0 390 486
- DE-A- 4 041 295
- DE-A- 4 337 367
- PATENT ABSTRACTS OF JAPAN vol. 18 no. 420 (P-1782) ,5.August 1994 & JP,A,06 130169 (HITACHI LTD)
- PATENT ABSTRACTS OF JAPAN vol. 17 no. 399 (P-1579) ,26.März 1993 & JP,A,05 072372 (TOSHIBA CORP)

## Beschreibung

Die Erfindung betrifft ein Kühlsystem mit einer Kühlleitung und/oder eine Flutleitung zur Kühlung eines Rückhalteraums zur Aufnahme von Kernschmelze eines Reaktorkerns einer Kernkraftanlage.

Für einen sicheren Betrieb weisen Kernkraftanlagen eine Vielzahl diversitärer und redundanter Sicherheitssysteme, u.a. Kühlsysteme auf, durch die frühzeitig von den normalen Betriebsbedingungen abweichende Betriebsbedingungen erkannt und diesen entgegengewirkt werden kann. Sicherheitskritische Zustande, wie beispielsweise ein Abschmelzen des Reaktorkerns, sind dadurch praktisch ausgeschlossen.

Zur Beherrschung eines solchen, als hypothetisch anzunehmenden, Störfalles ist in der DE 40 41 295 A1 eine Kernrückhaltevorrichtung und ein Verfahren zur Notkühlung einer Kernkraftanlage beschrieben. Die Kernrückhaltevorrichtung weist einen Auffangbehälter auf, welcher unmittelbar unterhalb des den Reaktorkern einschließenden Reaktordruckbehälters angeordnet ist. Der Auffangbehälter sowie der Reaktordruckbehälter sind innerhalb einer aus einer Betonstruktur gebildeten Reaktorkaverne angeordnet. Zwischen Auffangbehälter und Betonstruktur verlaufen am Boden und an den Wanden des Auffangbehälters Kühlkanäle, durch die Kühlwasser führbar ist. Die bodenseitigen Kühlkanäle sind mit einem Wasservorrat verbunden und münden in eine Kühl leitung, welche siphonartig in den Wasservorrat hineinragt. Die siphonartige Kühlleitung weist einen Teil mit einem auf dem Kopf stehenden U auf, wobei der Scheitelpunkt des U's oberhalb eines betrieblichen Pegelstandes des Wasservorrates liegt und die Kühl leitung zwar in den Wasservorrat eintaucht, aber in der Umgebung des Scheitelpunktes aus dem Wasservorrat hinausragt. Hierdurch gelangt während des betrieblichen Pegelstandes kein Kühlwasser in die Kühlkanäle. Erst bei Flutung des Wasservorrates auf einen Pegelstand, der den Scheitelpunkt des U's übersteigt, gelangt Kühlwasser in die Kühlkanäle und es erfolgt eine Kühlung des Auffangbehälters an seiner Außenseite.

Eine Kühlung des Inneren des Auffangbehälters erfolgt über eine Flutleitung, die von dem Wasservorrat durch die Betonstruktur in den Auffangbehälter hineingeführt ist. Die Flutleitung ist in dem Auffangbehälter durch einen aufschmelzbaren Stopfen verschlossen, welcher erst bei einer hohen Umgebungstemperatur aufschmilzt, wodurch Kühlwasser in das Innere des Auffangbehälters einströmen kann. In der Flutleitung ist selbst bei einem normalen Betrieb der Kernkraftanlage Kühlwasser vorhanden, wodurch der aufschmelzbare Stopfen ständig gekühlt wird.

Aufgabe der Erfindung ist es, ein Kühlsystem zur Kühlung eines zur Aufnahme von Kernschmelze ausgelegten Rückhalteraums anzugeben, welches durch passiv wirkende Mittel und damit inhärent sicher eine Kühlung des Auffangbehälters einleitet.

Erfindungsgemäß wird die Aufgabe durch ein Kühlsystem der in Anspruch 1 angegebenen Art gelöst.

Durch ein in Abhängigkeit von dem Pegelstand des Kühlfluids öffnendes Verschlußelement ist gewährleistet, daß erst bei Vorliegen eines sicherheitskritischen Zustandes mit einer Einspeisung von Kühlfluid in den Flutbehälter eine Kühlung des Rückhalteraums einsetzt. Das in den Flutbehälter zusätzlich einströmende Kühlfluid ist vorzugsweise Primärkühlwasser, welches während des sicherheitskritischen Zustands aus dem Primärkühlkreislauf des Reaktorkerns austritt. Kühlfluid kann gegebenenfalls über einen separaten Kühlfluidspeicher in den Flutbehälter eingespeist werden. Bis zu einem Öffnen des Verschlußelementes ist die Kühlleitung/Flutleitung verschlossen und damit frei von Wasser. Hierdurch ist während des normalen Betriebes der Kernkraftanlage Kühlfluid, insbesondere Kühlwasser, von dem Rückhalteraum ferngehalten, wodurch störende Einflüsse, wie beispielsweise Korrosion durch Kühlwasser oder eine ungewollte Kühlung eines temperaturabhängigen, die Kühl leitung verschließenden Verschlußelementes, vermieden wird. Zudem wird durch das passiv öffnende Verschlußelement die inhärente Sicherheit der Kernkraftanlage verbessert, wobei menschliches Fehlverhalten bei der Einleitung der Kühlung des Rückhalteraums ausgeschlossen ist.

Das Verschlußelement ist ein die Kühlleitung/Flutleitung abschließender Schwimmkörper. Dieser Schwimmkörper verfügt bei einem betrieblichen Pegelstand des Kühlwassers über einen solchen Auftrieb, daß er die Kühlleitung/Flutleitung beispielsweise über einen Ventilkugelsitz dichtend verschließt. Der Schwimmkörper ist vorzugsweise entlang einer Hauptachse in einer Führung bewegbar, so daß ein unbeabsichtigtes Verrutschen des Schwimmkörpers von seinem Dichtsitz selbst bei Erschütterungen, welche beispielsweise durch Erdbeben hervorgerufen werden können, vermieden ist.

Der Schwimmkörper hat vorzugsweise einen mit Kühlfluid füllbaren Innenraum. In diesen Innenraum ist ein Füllrohr hineingeführt, welches eine Einlaßöffnung für Kühlfluid hat, durch die bei einem geodätisch oberhalb eines betrieblichen Pegelstandes liegenden gefluteten Pegelstand Kühlfluid einströmt. Die Einlaßöffnung kann geodätisch oberhalb des betrieblichen Pegelstandes liegen oder geodätisch unterhalb dieses betrieblichen Pegelstandes liegen, wobei in letzterem Fall das Füllrohr von der Einlaßöffnung U-förmig über den betrieblichen Pegelstand hinausgeführt ist, so daß ein Scheitelpunkt des auf dem Kopf stehenden U's oberhalb des betrieblichen Pegelstandes liegt. Auch in letzterem Fall strömt erst bei Überschreiten des betrieblichen Pegelstandes um ein vorgebbares Maß Kühlfluid in den Innenraum des Schwimmkörpers ein. In den Innenraum einströmendes Kühlfluid vermindert die Auftriebskraft des Schwimmkörpers, so daß dieser ab einem gewissen Füllgrad des Innenraumes seinen Dichtsitz verläßt und dadurch die Kühlleitung geöffnet wird. Eine Kühlung des Rückhalteraums setzt hierdurch auf passive Art und Weise ein.

Der Schwimmkörper hat vorzugsweise eine in den Innenraum hineingeführte Kondenswasser-Absaugung, durch welche während eines normalen betrieblichen Zustandes der Kernkraftanlage auftretendes Kondenswasser abgesaugt werden kann. Hierdurch ist ein Absinken des Schwimmkörpers infolge anfallenden Kondenswassers und dadurch eine ungewollte Einleitung der Kühlung des Rückhalteraums sicher vermieden.

Der Rückhalteraum ist mit dem Flutbehälter vorzugsweise mit einer geodätisch oberhalb der Kühlleitung, insbesondere oberhalb des betrieblichen Pegelstandes, verlaufende Rückführung für Kühlfluid verbunden, welche in dem Flutbehälter mit einem weiteren pegelstandabhängig öffnenden Verschlußelement verschlossen ist. Durch die Rückführung wird eine innere Kühlung des Rückhalteraums durch einen Kühlfluidkreislauf erreicht, wobei von dem Flutbehälter zu dem Rückhalteraum strömendes Kühlfluid in einem Naturumlauf strömt. Hierdurch ist gewährleistet, daß während eines sicherheitskritischen Zustandes der Kernkraftanlage ausreichend Kühlfluid in den Flutbehälter zurückgeführt wird und eine Kühlung des Rückhalteraums, insbesondere der in dem Rückhalteraum aufgenommenen Kernschmelze, erfolgt.

Das Verschlußelement, welches die Rückführung in dem Flutbehälter verschließt und ebenfalls ein Schwimmkörper sein kann, hat bevorzugt ein Kugelventil. Dieses Kugelventil kann eine schwimmfähige Kugel, welche mit einer Führungsbahn in einer Dichtposition gehalten wird, aufweisen. Das Kugelventil schützt das Verschlußelement gegenüber einer Druckwelle, welche beispielsweise durch eine Temperaturerhöhung innerhalb des Rückhalteraums auftreten kann. Bei Einströmen von Kühlwasser aus dem Rückhalteraum in die Rückführung schwimmt die Kugel des Kugelventils auf und öffnet dadurch die Rückführung in den Flutbehälter.

Die Kühl leitung ist vorzugsweise eine Flutleitung, welche in den Rückhalteraum mündet und dadurch eine direkte Kühlung, insbesondere der Oberfläche, einer in den Rückhalteraum eingeströmten Kernschmelze gewährleistet. Die Flutleitung verläuft vorzugsweise waagrecht und ist von dem Flutbehälter aus montierbar sowie demontierbar. Ein Einbau der Flutleitung von dem Flutbehälter in den Rückhalteraum hinein hat den Vorteil, daß die Montage außerhalb des gegebenenfalls schwer zugänglich und möglicherweise verstrahlten Rückhalteraums erfolgt. Dies ist insbesondere bei einem den Reaktorkern umschließenden Rückhalteraum besonders günstig, da ein Einbau nach üblicherweise vorgesehener Auskleidung des Rückhalteraums mit einer tiegelartigen Schutz- und Auffangschicht erfolgen kann.

Die Flutleitung ist während eines normalen Betriebes der Kernkraftanlage in dem Rückhalteraum bevorzugt mit einem temperaturabhängig öffnenden Verschlußelement verschlossen. Sie ist während des normalen Betriebes der Kernkraftanlage mit Luft gefüllt, wodurch das temperaturabhängig öffnende Verschlußelement thermisch gegenüber dem Kühlwasser des Flutbehälters isoliert ist und Kühlwasser erst während eines sicherheitskritischen Zustandes der Kernkraftanlage in die Flutleitung gelangt, so daß Korrosionseinflüsse sicher vermieden sind. Durch die thermische Isolierung des temperaturabhängig öffnenden Verschlußelementes ist ein sicheres Öffnen, insbesondere Aufschmelzen, bei einer starken Wärmeentwicklung innerhalb des Rückhalteraums gewährleistet. Das temperaturabhängig öffnende Verschlußelement kann daher so ausgelegt sein, daß es gegenüber einem mit Kühlwasser in direktem Kontakt stehenden Verschlußelement erst bei höheren Temperaturen die Flutleitung öffnet. Das temperaturabhängig öffnende Verschlußelement ist vorzugsweise resistent gegen Neutronenstrahlung, welche während eines normalen Betriebes der Kernkraftanlage in unmittelbarer Umgebung des Reaktorkerns, insbesondere in der den Reaktordruckbehälter aufnehmenden Reaktorkaverne, auftritt. Es weist zudem mit Vorteil nur ein einziges aufschmelzendes Element (Schmelzschraube, Schmelzband) auf, wodurch ein Verkanten und damit verspätetes Öffnen des Verschlußelements bei mehreren zu unterschiedlichen Zeitpunkten aufschmelzenden Elementen vermieden ist. Das Verschlußelement ist darüber hinaus dem Querschnitt der Flut leitung angepaßt, so daß eine Montage der Flutleitung mit bereits aufgesetzten Verschlußelement gewährleistet ist.

Vorzugsweise hat das temperaturabhängig öffnende Verschlußelement ein bei einer hoher Temperatur, beispielsweise oberhalb 900 °C, aufschmelzendes Material. Dieses Material kann korrosionsbeständig und strahlungsresistent, insbesondere Silber, sein. Das temperaturabhängig öffnende Verschlußelement kann einen Bügelverschluß mit einer Spannschraube aus Silber aufweisen. Der Bügelverschluß drückt einen Deckel dichtend in die Flutleitung, so daß diese während des normalen Betriebes der Kernkraftanlage mit Sicherheit verschlos sen ist. Das temperaturabhängig öffnende Verschlußelement kann alternativ eine Verschlußkappe aufweisen, welche mit der Flutleitung dichtend verlötet ist. Als Lötsubstanz kann eben falls Silber dienen.

Bevorzugt hat der Rückhalteraum eine Außenkühlung zur außenseitigen Kühlung zumindest eines Bodens und/oder einer Wand des Rückhalteraums, wobei die Kühlleitung eine die Außenkühlung mit dem Flutbehälter verbindende Zuleitung ist. Die Zuleitung ist während eines normalen Betriebes der Kernkraftanlage durch einen Schwimmkörper verschlossen. Die Außenkühlung weist vorzugsweise eine Ableitung für das Kühlfluid auf, welche in den Flutbehälter zurückführt. Hierdurch gelangt Kühlfluid, insbesondere in den Flutbehälter eingeströmtes Primärkühlwasser, wieder in den Flutbehälter zurück, so daß für die Außenkühlung des Rückhalteraums ein Kühlkreislauf gegeben ist.

Der Rückhalteraum kann ein tiegelartiger, unterhalb des Reaktorkerns angeordneter Auffangbehälter sein. Eine Kühlung des Auffangbehälters, welche auf passive Art und Weise durch einen in dem Flutbehälter angeordneten Schwimmkörper einsetzt, erfolgt an der Außenseite des Auffangbehälters durch die Außenkühlung und/oder im Inneren des Auffangbehälters durch eine Flutleitung.

Vorzugsweise ist eine von dem Flutbehälter zu dem Auffangbehälter und in letzteren mündende Flutleitung wärmeelastisch geführt. Die Flutleitung hat außerhalb des Auffangbehälters, insbesondere zwischen der Wand des Auffangbehälters und einer eine Reaktorkaverne bildenden Betonstruktur einen Kompensator. Der insbesondere aufgeschweißte Kompensator mit einem angeschweißten Flansch in Kugelform dichtet den Auffangbehälter, welcher beispielsweise in seinem Inneren eine Temperatur von ca. 300 °C hat, gegenüber der Außenkühlung des Auffangbehälters mit einer Temperatur von 20 °C bis 30 °C ab. Der Kompensator dient der Kompensation von Wärmedehnungen des Auffangbehälters und gewährleistet zusätzlich eine Abdichtung der Flutleitung gegenüber einer Kühlfluidströmung zur Kühlung der Außenwand des Auffangbehälters.

Das Kühlsystem eignet sich ebenfalls zur Kühlung eines seitlich unterhalb des Reaktorkerns angeordneten Ausbreitungsraumes. Der Ausbreitungsraum kann durch eine Flutleitung, welche von einem Flutbehälter in den Ausbreitungsraum hineinführt, in seinem Inneren gekühlt werden. Eine Außenkühlung des Ausbreitungsraumes durch entsprechend verlaufende Kühlkanäle, welche durch ein passiv öffnendes Verschlußelement, beispielsweise einen Schwimmkörper innerhalb des Flutbehälters, mit Kühlfluid geflutet werden, ist ebenfalls möglich.

Anhand der Zeichnung wird ein Ausführungsbeispiel der Erfindung näher erläutert. Das in der Zeichnung erläuterte Ausführungsbeispiels für einen Rückhalteraum, welcher ein tiegelartiger Auffangbehälter ist, gilt analog für einen als Ausbreitungsraum ausgestalteten Rückhalteraum. Es zeigen:
- FIG 1: ein Ausschnitt eines Längsschnittes durch eine Kernkraftanlage,
- FIG 2: eine vergrößerte Darstellung des Verschlußelementes in der Rückführung,
- FIG 3: eine vergrößerte Darstellung einer von dem Flutbehälter in den Auffangbehälter führenden Flutleitung,
- FIG 4: eine vergrößerte Darstellung des Verschlußelementes der Flutleitung in dem Auffangbehälter und
- FIG 5: eine alternative Ausführungsform des Verschlußelementes der Flutleitung in dem Auffangbehälter.

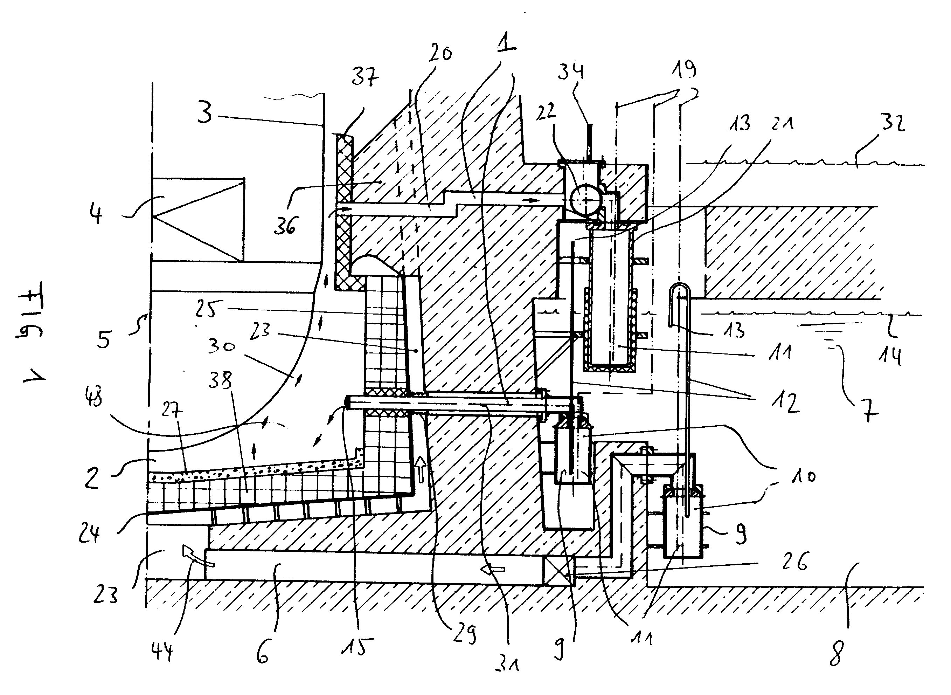

Gleiche Bezugszeichen in den FIG 1 bis 5 bezeichnen jeweils gleiche Komponenten des Ausführungsbeispieles.

In FIG 1 ist ein Ausschnitt eines Längsschnittes durch eine Kernkraftanlage mit einem Kühlsystem 1 zur Kühlung eines zur Aufnahme von Kernschmelze ausgelegten Rückhalteraums 2 dargestellt. Ein um seine Hauptachse 5 weitgehend rotationssymmetrischer Reaktordruckbehälter 3 ist in einer durch eine Tragstruktur 36 gebildenden Reaktorkaverne 48 angeordnet. Der Reaktordruckbehälter 3 beinhaltet einen Reaktorkern 4. Unterhalb des Reaktordruckbehälters 3 ist in der Reaktorkaverne 48 ein Rückhalteraum 2 durch einen Auffangbehälter 28 für Kernschmelze gebildet, welcher einen Boden 24 und eine Wand 25 hat. Zwischen der Tragstruktur 36 und der Wand 25 sowie dem Boden 24 verbleibt ein Freiraum für eine Außenkühlung 23 des Auffangbehälters 28. Im Inneren des Auffangbehälters 28 schließt sich an den Boden 24 und die Wand 25 eine Auskleidung 38, beispielsweise aus Zirkonoxid-Steinen (ZrO₂), an. Auf die bodenseitige Auskleidung 38 ist eine Schicht aus Opferbeton 27, insbesondere zur Erniedrigung des Schmelzpunktes einer Kernschmelze, angeordnet. Durch die Wand 25 sowie die daran anschließende Tragstruktur 36 ist mit geringer Neigung gegenüber der Horizontalen eine als Flutleitung 31 ausgeführte Kühlleitung 6 für Kühlfluid 7 angeordnet, welche von einem Flutbehälter 8 in den Auffangbehälter 28 hineinführt. In dem Auffangbehälter 28 ist die Flutleitung 31 durch ein Verschlußelement 15, insbesondere ein temperaturabhängig öffnen; des Verschlußelement 15, verschlossen. In dem Flutbehälter 8 ist die Flutleitung 31 durch ein pegelstandsabhängig öffnendes Verschlußelement 9, insbesondere mit einem Schwimmkörper 10, verschlossen. Zwischen der Wand 25 und der Tragstruktur 36 ist die Flutleitung 31 von einem Kompensator 29 umgeben, der die Wand 25 gegenüber der Außenkühlung 23 abdichtet und Wärmedehnungen des Auffangbehälters 28 aufnimmt. Der die Flutleitung 31 dichtende Schwimmkörper 10 hat einen Innenraum 11, in den ein Füllrohr 12 eingeführt ist, welches eine Einlaßöffnung 13 geodätisch oberhalb der Flutleitung 31 hat. Die Einlaßöffnung 13 liegt ebenfalls oberhalb eines betrieblichen Pegelstandes 14 des Kühlfluids 7, insbesondere Kühlwasser, welches in dem Flutbehälter 8 befindlich ist. Die Außenkühlung 23 des Auffangbehälters 28 ist durch eine im wesentlichen waagrecht unterhalb der Reaktorkaverne 48 durch die Tragstruktur 36 verlaufende Zuleitung 26 mit dem Flutbehälter 8 verbunden. In dem Flutbehälter 8 ist die Zuleitung 26 ebenfalls durch ein Verschlußelement 9 mit einem Schwimmkörper 10 verschlossen. In den Innenraum 11 des Schwimmkörpers 10 ragt ein Füllrohr 12 hinein, welches bis oberhalb des betrieblichen Pegelstandes 14 aus dem Kühlfluid 7 herausgeführt und U-förmig wieder in das Kühlfluid 7 zurückgebogen ist, wo es in einer Einlaßöffnung 13 endet. Oberhalb des betrieblichen Pegelstandes 14 und damit oberhalb der Flutleitung 31 verläuft eine Rückführung 20 für eine Innenkühlung von der Reaktorkaverne 48 in den Flutbehälter 8. Innerhalb des Flutbehälters 8 ist diese Rückführung 20 durch ein weiteres Verschlußelement 21, mit einem weiteren Schwimmkörper 10, der etwa hälftig in das Kühlwasser 7 eingetaucht ist, verschlossen. Zwischen dem weiteren Verschlußelement 21 und der Rückführung 20 ist ein Kugelventil 22 mit einer Schwimmkugel angeordnet. Jedes der Verschlußelemente 9,21 hat eine jeweilige Kondenswasser-Absaugung 19. Die Rückführung 20 verläuft in der Reaktorkaverne 48 oberhalb des Auffangbehälters 28 durch die Tragstruktur 36 sowie durch eine sich an die Tragstruktur 36 anschließende Isolierung 37 hindurch. Die Rückführung 20 ist mit dem Inneren des Auffangbehälters 28 verbunden.

Während eines normalen Betriebes der Kernkraftanlage ist das die Außenkühlung 23, die Flutleitung 31, die Rückführung 20 sowie die Verschlußelemente 9,21,15 umfassende Kühlsystem 1 verschlossen. Insbesondere sind sowohl die Außenkühlung 23 als auch die Flutleitung 31 mit Luft gefüllt. Die Außenkühlung 23 dient bei einem normalen Betrieb der Kernkraftanlage einer betrieblichen Luftkühlung, wodurch ein Aufheizen der Tragstruktur verhindert wird. Durch acht Luftschächte, die außerhalb der Tragstruktur 36 liegen, wird Kühlluft nach unten in die Zuleitung 26, welche als Ringkanal ausgebildet und mit acht horizontalen Kanälen verbunden ist, an die Außenseite des Auffangbehälter 28 geführt. Die sich erwärmende Kühlluft steigt an der Außenseite des Auffangbehälters 28 und der Tragstruktur 36 nach oben auf und kann in das nicht dargestellte Reaktorgebaude der Kernkraftanlage entweichen. Der Ringkanal ist ebenfalls über acht Rohre mit dem Flutbehälter 8 verbunden. Während eines Störfalles mit abschmelzendem Reaktorkern 4 wird der Flutbehälter 8 mit zusätzlichem Kühlfluid, insbesondere Kühlwasser 7, geflutet, so daß der Pegelstand von dem betrieblichen Pegelstand 14 auf einen erhöhten Pegelstand ansteigt, welcher oberhalb der Einlaßöffnungen 13 der Schwimmkörper 10 liegt. Das zusätzliche Kühlfluid ist hierbei aus dem Primärkühlkreislauf des Reaktorkerns 4 austretendes Primärkuhlwasser. Das zusätzliche Kühlfluid kann gegebenenfalls aus einem separaten zusätzlichen Kühlfluidvorrat eingespeist werden. Die Schwimmkörper 10, welche die Flutleitung 31 und die Außenkühlung 23 verschließen, werden mit Kühlwasser 7 gefüllt und sinken aufgrund des geringer werdenden Auftriebes ab. Hierdurch werden sowohl die Flutleitung 31 als auch die Außenkühlung 23 mit Kühlwasser 7 gefüllt. Bei Überschreiten des betrieblichen Pegelstandes 14 setzt zuerst die Außenkühlung 23 ein. Eine Rückführung von Kühlwasser 7 über die Außenkühlung 23 erfolgt über sechs horizontal verlaufende, nicht dargestellte Kanäle oberhalb des betrieblichen Pegelstandes 14 in den Flutbehälter 7. Die Rückführung der Außenkühlung 23 und die Rückführung 20 der Innenkühlung sind von einander getrennt. Die aufgrund des abschmelzenden Reaktorkerns 4 austretende Kernschmelze führt in dem Auffangbehalter 28 zu einer Wärmeentwicklung, durch die das temperaturabhängig öffnende Verschlußelement 15 der Flutleitung 31 ebenfalls öffnet. Hierdurch strömt Kühlfluid 7 in das Innere des Auffangbehälters 28 zur Kühlung der Kernschmelze ein. Der erhöhte Pegelstand innerhalb des Flutbehälters 8 sinkt daraufhin auf einen Flutpegelstand 32, beispielsweise um 30 cm bis 60 cm, ab, so daß der Pegelstand des Kühlwassers 7 in der Reaktorkaverne 48 und dem Flutbehälter 8 gleich hoch ist. Das in den Auffangbehälter 28 durch die Flutleitung 31 einströmende Kühlfluid 7 wird erwärmt und steigt gemäß der dargestellten Strömungspfeile 30 in einem Naturumlauf auf und strömt durch die Rückführung 20 in den Flutbehälter 8 zurück (durch die Strömungspfeile 30 dargestellt). Durch Öffnen des Verschlußelementes 9 der Außenkühlung 23 gelangt über die Zuleitung 26 aus dem Flutbehälter 8 Kühlwasser 7, wie durch die Strömungspfeile 44 dargestellt, an die Außenseite des Auffangbehälters 28, welches dort verdampft und über nicht dargestellte Kanäle in den Flutbehälter 8 zurückgeführt wird. Durch die Verdampfung erfolgt eine Kühlung des Auffangbehälters 28 auch von außen. Das verdampfte Kühlwasser 7 steigt innerhalb der Kernkraftanlage auf, kondensiert und gelangt in den Flutbehälter 8 zurück. Mittels der bei einem Anstieg des Pegelstandes in dem Flutbehälter 8 öffnenden Verschlußelemente 9 für die Flutleitung 31 sowie für die Außenkühlung 23 ist eine wirksame Kühlung einer in den Auffangbehälter 28 auftreffenden Kernschmelze über einen langen Zeitraum gewährleistet.

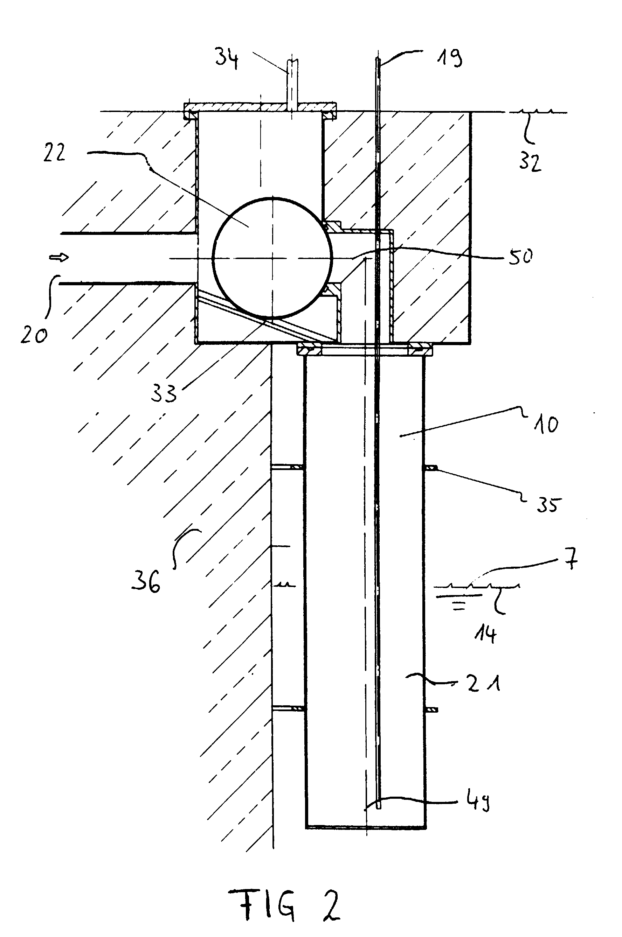

In FIG 2 ist das weitere Verschlußelement 21 gemäß FIG 1 mit einem Schwimmkörper 10 und einem Kugelventil 22 mit einer schwimmfähigen Kugel in vergrößertem Maßstab dargestellt. Der Schwimmkörper 10 ist bei einem betrieblichen Pegelstand 14 etwa bis zur Hälfte in das Kühlwasser 7 eingetaucht. Die schwimmfähige Kugel des Kugelventils 22 ruht auf einem von der Rückführung 20 zu dem Schwimmkörper 10 fallend verlaufenden Kugel-Positionshalter 33. Selbst bei einer in der Reaktorkaverne 48 entstehenden und sich über die Rückführung 20 ausbreitenden Druckwelle dichtet das Kugelventil 22 den Schwimmkörper 10 ab, wodurch dieser geschützt bleibt. Der Schwimmkörper 10 ist in Führungen 35 geführt, so daß er entlang einer Achse 49 verschieblich ist. Das Kugelventil 22 hat eine Entlüftung 34. Während eines normalen Betriebszustandes der Kernkraftanlage ist die Rückführung 20 trocken, insbesondere mit Luft gefüllt. Bei Anstieg des Pegelstandes innerhalb des Flutbehälters 8 von dem betrieblichen Pegelstand 14 auf einen Flutpegelstand 32 der geodätisch oberhalb des weiteren Verschlußelementes 21 liegt, gelangt über die Rückführung 20 in das Kugelventil 22 Kühlwasser 7. Nach Eintritt des Kühlwassers 7 in das Kugelventil 22 steigt die schwimmfähige Kugel auf und gibt einen Durchgang 50 frei, durch den Kühlwasser 7 aus der Rückführung 20 in den Schwimmkörper 10 einströmen kann. Durch das einströmende Kühlwasser 7 verringert sich der Auftrieb des Schwimmkörpers 10 und er sinkt entlang der Achse 49 in dem Flutbehälter 8 ab, wodurch Kühlwasser 7 aus der Rückführung 20 in den Flutbehälter 8 in einem Naturumlauf zurückströmen kann.

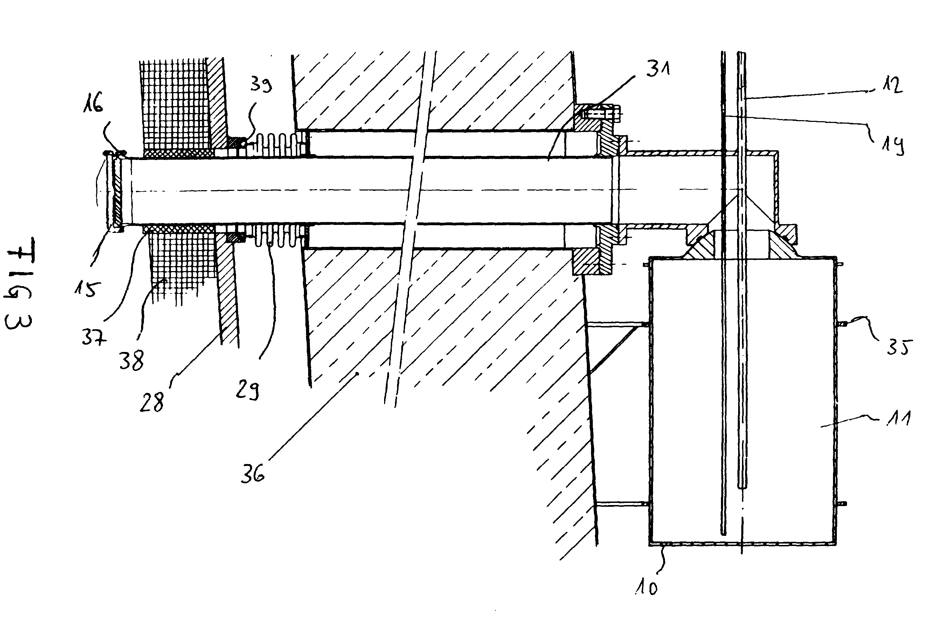

In FIG 3 ist die Flutleitung 31 gemäß FIG 1 in vergrößertem Maßstab dargestellt. Innerhalb des Auffangbehälters 28 ist die Flutleitung 31 mit dem temperaturabhängig öffnenden Verschlußelement 15, welches einen Bügelverschluß 16 aufweist, verschlossen. Zwischen der Tragstruktur 36 und dem Auffangbehälter 28 ist die Flutleitung 31 mit einem Kompensator 29 umgeben, welcher an dem Auffangbehälter 28 in einem Kugel-Dichtsitz 39 dichtend anliegt.

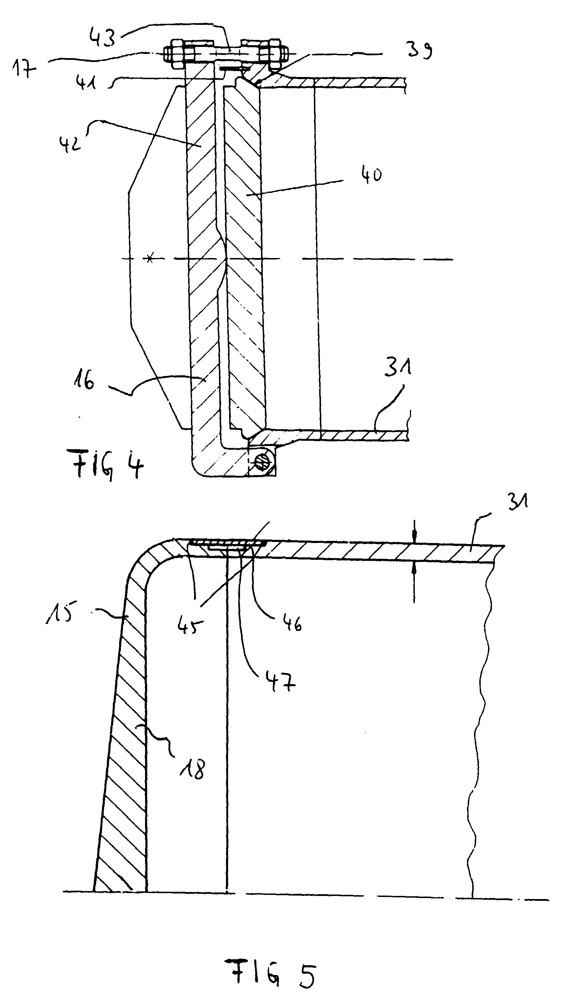

FIG 4 zeigt in vergrößertem Maßstab das temperaturabhängig öffnende Verschlußelement 15 gemäß FIG 3. Der Bügelverschluß 16 drückt über einen Bügel 42 einen Deckel 40 fest in einen Kugel-Dichtsitz 39 der Flutleitung 31. Der Bügel 42 ist über eine Spannschraube 17, die einen Schmelzbolzen 43 aufweist, fest mit der Flutleitung 31 verbunden. Der Schmelzbolzen 43 besteht aus Silber mit einer Schmelztemperatur von etwa 960 °C. Zwischen dem Schmelzbolzen 43 und dem Deckel 40 ist parallel zur Flutleitung 31 ein Spritzschutz 41 zum Schutz des Schmelzbolzens 43 gegen austretendes Kühlwasser 7 angeordnet. Hierdurch ist selbst bei einer Undichtigkeit des Kugel-Dichtsitzes 39 gewährleistet, daß ein Durchschmelzen des Schmelzbolzens 43 durch verdampfendes Kühlwasser 7 nicht verzögert wird.

In FIG 5 ist eine alternative Ausführungsform eines temperaturabhängig öffnendes Verschlußelementes 15 für die Flutleitung 31 dargestellt. Das Verschlußelement 15 weist eine Verschlußkappe 18 auf, die über einen die Flutleitung 31 umfassenden Silberstreifen 46 an zwei Lötbändern 45 mit der Flutleitung 31 verlötet ist. Zwischen dem Silberstreifen 46 und den aneinanderstoßenden Partien der Flutleitung 31 und der Verschlußkappe 18 ist eine Isolierung 47 aus einem Luftpolster eingebracht. Bei hoher Wärmeentwicklung in dem Rückhalteraum 2 schmelzen die Lötbänder 45 und ggf. der Silberstreifen 46 auf, so daß die Verschlußkappe 18 abfällt und die Flutleitung 31 öffnet. Die in FIG 4 und FIG 5 dargestellten Verschlußelemente 15 weisen jeweils nur ein aufschmelzendes Element 43,46 auf. Hierdurch ist die Gefahr eines ungleichen Aufschmelzens zweier des Verschlußelement verschließenden aufschmelzenden Elemente mit der Möglichkeit eines verspäteten Öffnen des Verschlußelementes vermieden.

Die Erfindung zeichnet sich durch ein Kühlsystem mit einer Kühlleitung und/oder einer Flutleitung zur Kühlung eines zur Aufnahme von Kernschmelze ausgelegten Rückhalteraumes aus, wobei die Kühlung mittels eines passiven Verschlußelementes ausgelöst wird. Das Verschlußelement öffnet in Abhängigkeit von dem Pegelstand des Kühlwasser in einem Flutbehälter, so daß Kühlwasser in den Rückhalteraum bzw. entlang seiner Außenflächen strömt. Das Verschlußelement ist ein Schwimmkörper, welcher durch seine Auftriebskraft die Kühlleitung abschließt. Der Schwimmkörper ist bevorzugt so ausgelegt, daß über ein Füllrohr bei Erreichen eines Pegelstandes des Kühlwassers, welcher über einem betrieblichen Pegelstand liegt, der Schwimmkörper mit Kühlwasser gefüllt wird und die Kühl leitung öffnend in den Flutbehälter herabsinkt. Das Kühlsystem kann über eine Rückführung verfügen, die oberhalb der in den Rückhalteraum Kühlwasser einspeisenden Fluidleitung geführt ist. Durch die Rückführung und die Fluidleitung bildet sich ein Naturumlauf des Kühlwassers aus, wodurch eine effektive Kühlung des Rückhalteraumes und der darin aufgefangenen Kernschmelze gewährleistet ist.

## Patentansprüche

1. Kühlsystem (1) zur Kühlung eines der Aufnahme von Kernschmelze eines Reaktorkerns (4) einer Kernkraftanlage dienenden Rückhalteraums (2) mit einer Kühlleitung (6) und/oder einer Flutleitung (31)
**dadurch gekennzeichnet,** daß die Kühlleitung (6) und/oder die Flutleitung (31) von einem mit Kühlfluid (7) füllbaren Flutbehälter (8) zu dem bzw. in den Rückhalteraum (2) führt und in dem Flutbehälter (8) ein passiv öffnendes Verschlußelement (9) aufweist, das ein die Kühlleitung (6) / Flutleitung (31) abschließender Schwimmkörper (10) ist, und in Abhängigkeit von dem Pegelstand des Kühlfluids (7) schließt und öffnet.

2. Kühlsystem (1) nach Anspruch 1, bei dem der Schwimmkörper (10) einen mit Kühlfluid (7) füllbaren Innenraum (11) hat, in den ein Füllrohr (12) hineingeführt ist, welches eine Einlaßöffnung (13) für Kühlfluid (7) hat, durch die bei einem einen betrieblichen Pegelstand (14) übersteigenden Flutpegelstand (32) das Kühlfluid (7) einströmt.

3. Kühlsystem (1) nach einem der Ansprüche 1 oder 2, bei dem der Schwimmkörper (10) eine Kondenswasser-Absaugung (19) aufweist.

4. Kühlsystem (1) nach einem der Ansprüche 1 bis 3, mit einer geodätisch oberhalb der Kühlleitung (6) / Flutleitung (31) verlaufenden Rückführung (20) für Kühlfluid (7), welche den Rückhalteraum (2) mit dem Flutbehälter (8) verbindet und in dem Flutbehälter (8) ein weiteres pegelstandabhängig öffnendes Verschlußelement (21) aufweist.

5. Kühlsystem (1) nach Anspruch 4, bei dem das weitere Verschlußelement (21) ein Kugelventil (22) aufweist.

6. Kühlsystem (1) nach einem der Ansprüche 1 bis 5, bei dem die Flutleitung (31) in dem Rückhalteraum (2) mit einem temperaturabhängig öffnenden Verschlußelement (15) verschlossen ist.

7. Kühlsystem (1) nach Anspruch 6, bei dem das temperaturabhängig öffnende Verschlußelement (15) ein Bügelverschluß (16) mit einer oberhalb von 900 °C aufschmelzenden Spannschraube (17) aus Silber ist.

8. Kühlsystem (1) nach Anspruch 6, bei dem das temperaturabhängig öffnende Verschlußelement (15) eine mit Silber verlötete Verschlußkappe (18) ist.

9. Kühlsystem (1) nach einem der Ansprüche 1 bis 8, welches eine Außenkühlung (23) zur Kühlung zumindest eines Bodens (24) und/oder einer Wand (25) des Rückhalteraums (2) mit Kühlfluid (7) hat, wobei die Kühlleitung (6) den Flutbehälter (8) mit der Außenkühlung (23) verbindet.

10. Kühlsystem (1) nach einem der Ansprüche 1 bis 9, bei dem der Rückhalteraum (2) ein tiegelartiger, unterhalb des Reaktorkerns (4) angeordneter Auffangbehälter (28) ist.

11. Kühlsystem (1) nach Anspruch 10, bei dem die Flutleitung(31) außerhalb des Auffangbehälters (28) einen Kompensator (29) zur Kompensation von Wärmedehnungen des Auffangbehälters (28) aufweist.

12. Kühlsystem (1) nach einem der Ansprüche 1 bis 9, bei dem der Rückhalteraum (2) ein seitlich unterhalb des Reaktorkerns (4) angeordneter Ausbreitungsraum ist.

## Claims

1. Cooling system (1) for cooling a containment chamber (2) used for receiving core melt of a reactor core (4) of a nuclear power plant, having a cooling conduit (6) and/or a flood conduit (31),
characterized in that the cooling conduit (6) and/or the flood conduit (31) leads from a flood container (8) fillable with cooling fluid (7) to the or into the containment chamber (2) and has in the flood container (8) a passively opening closure element (9), which is a floating body (10) which seals the cooling conduit (6) / flood conduit (31) and closes and opens in dependence upon the level of the cooling fluid (7).

2. Cooling system (1) according to claim 1, where the floating body (10) has an interior (11) fillable with cooling fluid (7), into which interior a fill pipe (12) is guided, which has an inlet opening (13) for cooling fluid (7), through which the cooling fluid (7) flows in when there is a flood level (32) which exceeds an operative level (14).

3. Cooling system (1) according to one of claims 1 or 2, where the floating body (10) has a condensed water suction removal device (19).

4. Cooling system (1) according to one of claims 1 to 3, having a return (20) for cooling fluid (7) which extends geodetically above the cooling conduit (6) / flood conduit (31) and which connects the containment chamber (2) with the flood container (8) and in the flood container (8) has another closure element (21) opening in a level-dependent manner.

5. Cooling system (1) according to claim 4, where the additional closure element (21) has a ball valve (22).

6. Cooling system (1) according to one of claims 1 to 5, where the flood conduit (31) in the containment chamber (2) is closed with a closure element (15) which opens in a temperature-dependent manner.

7. Cooling system (1) according to claim 6, where the closure element (15) which opens in a temperature-dependent manner is a bale closure (16) with a tightening screw (17) of silver which melts above 900°C.

8. Cooling system (1) according to claim 6, where the closure element (15) which opens in a temperature-dependent manner is a closure cap (18) soldered with silver.

9. Cooling system (1) according to one of claims 1 to 8, which has an external cooling device (23) for cooling at least one floor (24) and/or one wall (25) of the containment chamber (2) with cooling fluid (7), wherein the cooling conduit (6) connects the flood container (8) to the external cooling device (23).

10. Cooling system (1) according to one of claims 1 to 9, where the containment chamber (2) is a crucible-like collecting vessel (28) which is arranged below the reactor core (4).

11. Cooling system (1) according to claim 10, where the flood conduit (31) outside the collecting vessel (28) has a compensator (29) for the compensation of thermal expansions of the collecting vessel (28).

12. Cooling system (1) according to one of claims 1 to 9, where the containment chamber (2) is a propagation chamber arranged laterally below the reactor core (4).

## Revendications

1. Système de refroidissement (1) pour le refroidissement d'une enceinte de confinement (2) avec conduite de refroidissement (6) et/ou conduite d'inondation (31), servant à la reprise des produits de fusion d'un coeur de réacteur (4) d'une installation de centrale nucléaire, caractérisé en ce que la conduite de refroidissement (6) et/ou la conduite d'inondation (31) mène vers resp. dans l'enceinte de confinement (2) au départ d'un réservoir d'inondation (8) pouvant être rempli d'un fluide de refroidissement (7) et présente dans le réservoir d'inondation (8) un élément de fermeture (9) s'ouvrant passivement qui est un flotteur (10) fermant la conduite de refroidissement (6) / la conduite d'inondation (31) et qui s'ouvre et se ferme selon le niveau du fluide de refroidissement (7).

2. Système de refroidissement (1) selon la revendication 1, dans lequel le flotteur (10) possède une chambre intérieure (11) pouvant être remplie avec un fluide de refroidissement (7), dans laquelle est introduit un tube de remplissage (12), lequel présente une ouverture d'entrée (13) de fluide de refroidissement (7), par laquelle le fluide de refroidissement (7) afflue lorsque le niveau d'inondation (32) dépasse le niveau de service (14).

3. Système de refroidissement (1) selon l'une des revendications 1 ou 2, dans lequel le flotteur (10) présente un dispositif d'aspiration de l'eau de condensation (19).

4. Système de refroidissement (1) selon l'une des revendications 1 à 3, avec une conduite de retour (20) pour fluide de refroidissement (7) qui passe géodésiquement au-dessus de la conduite de refroidissement (6) / la conduite d'inondation (31), laquelle relie l'enceinte de confinement (2) au réservoir d'inondation (8) et qui présente dans le réservoir d'inondation (8) un élément de fermeture (21) supplémentaire s'ouvrant en fonction du niveau.

5. Système de refroidissement (1) selon la revendication 4, dans lequel l'élément de fermeture supplémentaire (21) présente une soupape sphérique (22).

6. Système de refroidissement (1) selon l'une des revendications 1 à 5, dans lequel la conduite d'inondation (31) dans l'enceinte de confinement (2) est fermée avec un élément de fermeture (15) s'ouvrant en fonction de la température.

7. Système de refroidissement (1) selon la revendication 6, dans lequel l'élément de fermeture (15) s'ouvrant en fonction de la température est une fermeture à étrier (16) avec une vis de serrage (17) en argent qui fond à plus de 900°C.

8. Système de refroidissement (1) selon la revendication 6, dans lequel l'élément de fermeture (15) s'ouvrant en fonction de la température est une coiffe de fermeture (18) soudée à l'argent.

9. Système de refroidissement (1) selon l'une des revendications 1 à 8, lequel présente un refroidissement extérieur (23) pour refroidissement au moins d'un fond (24) et/ou d'une paroi (25) de l'enceinte de confinement (2) avec du fluide de refroidissement (7), la conduite de refroidissement (6) reliant le réservoir d'inondation (8) au refroidissement extérieur (23).

10. Système de refroidissement (1) selon l'une des revendications 1 à 9, dans lequel l'enceinte de confinement (2) est un réservoir collecteur (28) en forme de creuset disposé sous le coeur de réacteur (4).

11. Système de refroidissement (1) selon la revendication 10, dans lequel la conduite d'inondation (31) présente à l'extérieur du réservoir collecteur (28) un compensateur (29) pour compensation de dilatations thermiques du réservoir collecteur (28).

12. Système de refroidissement (1) selon l'une des revendications 1 à 9, dans lequel l'enceinte de confinement (2) est une chambre d'expansion disposée latéralement sous le coeur de réacteur (4).
